# EUROPEAN PATENT SPECIFICATION

(11) **EP 1 286 930 B1**
(45) Date of publication and mention of the grant of the patent: **06.08.2008**
(21) Application number: 01945172.3
(22) Date of filing: 18.05.2001
(51) Int. Cl.: C04B 28/02, C04B 24/04

(54) **ADMIXTURE FOR CEMENTITIOUS COMPOSITIONS**
ZUSATZMITTEL FÜR ZEMENTZUSAMMENSETZUNGEN
MELANGE POUR COMPOSITIONS A BASE DE CIMENT

(30) Priority: 25.05.2000 US 207040 P
(43) Date of publication of application: 05.03.2003
(73) Proprietor: Construction Research & Technology GmbH, 83308 Trostberg (DE)
(72) Inventor: LU, Runhai, Stow, OH 44224 (US)
(86) International application number: PCT/EP2001/005792
(87) International publication number: WO 2001/090023

(56) References cited:
- EP-A- 0 461 738
- WO-A-98/05709
- GB-A- 938 567
- US-A- 3 885 985
- US-A- 5 763 508
- CHEMICAL ABSTRACTS, vol. 109, no. 16, 17 October 1988 (1988-10-17) Columbus, Ohio, US; abstract no. 134059d, Y. CHIBA: page 312; XP000158436 & JP 63 134542 A (ID.) 7 June 1988 (1988-06-07)
- ANONYMUS: "Product Information: Darapel" May 2005 (2005-05), Retrieved from the Internet: URL:www.graceconstruction.com> [retrieved on 2006-07-27]

## Description

### FIELD OF THE INVENTION

The present invention is directed to an admixture for cementitious compositions. More particularly, the present invention is directed to an admixture that imparts water repellent properties to cementitious compositions.

### BACKGROUND OF THE INVENTION

"Cementitious mixture" refers to pastes, mortars, and concrete compositions comprising a hydraulic cement binder having consistencies ranging from stiff to extremely dry as defined in ACI 211.3R, Table 2.3.1. Pastes are defined as mixtures composed of a hydraulic cement binder, either alone or in combination with pozzolans such as fly ash, silica fume, or blast furnace slag, and water. Mortars are defined as pastes that additionally include fine aggregate. Concretes additionally include coarse aggregate. These compositions may additionally include other admixtures such as set retarders, set accelerators, defoaming agents, air-entraining or air-detraining agents, corrosion inhibitors, water-reducing agents, pigments, and any other admixture that does not adversely affect the advantageous results obtained by the admixtures of the present invention.

Cementitious cast mixtures are used to form many articles, for example, concrete pipe, roof tile, masonry units, paver units, extruded plank, and any other preformed cementitious articles, in a mould or from an extrusion die. Each of these applications has basic desired characteristics that are critical in terms of producing quality finished units.

In masonry block applications, production speed, sufficient green strength, and the ability to resist slumping, sagging or deforming when stripped from the mould is critical since stripping occurs immediately after casting. The same is true for concrete pipe or roof tile with the additional desired property of improved surface appearance with reduced surface imperfections and reduced roller and/or die wear on equipment producing extruded pieces.

It is desired to reduce the cycle time of the manufacture of each article. The reduction of cycle time reduces the cost of manufacture for each article and increases the number of articles that can be produced in a given time. Cycle time is defined as the time to complete one full cycle from the beginning of feed to the end, or next beginning of feed. The beginning of feed is when the cast mixture is fed from a collection hopper into the process. It is also desired to improve the compaction and consolidation of the cementitious cast mixture without altering the consistency of the mixture.

Green strength refers to the stability of the article in retaining its shape once the article is removed from the mould or extruder. Green strength is dependent on the consistency of the cementitious cast mixture, the amount of fines in the cementitious cast mixture, and the mouldability of the cementitious cast mixture.

Currently, the water to cement (W/C) ratio used in cast mixtures is from about 0.25 to about 0.60. It is desired to minimize the amount of water needed in a cementitious cast mixture to achieve consolidation and no sag or deformation in an article produced from the cementitious cast mixture.

Another property of cementitious cast mixtures for certain cast industries is swipe. Swipe is defined as surface effect on a cast article when the mould is removed. Swipe is measured by visually evaluating the surface of the finished article. Swipe is ranked from no swipe to heavy swipe. It is desired to achieve a selected amount of swipe for a finished article.

A further limitation in the present art is the compressive strength of articles produced from cementitious mixtures. Early compressive strength is defined as the compressive strength achieved within 24 hours with or without steam cure. Compressive strength is determined by ASTM C-1176-2.

Another limitation is water permeation through the finished cementitious article. When a cementitious article becomes wetted, such as by direct contact or from rain, water can penetrate the article. This occurs because cementitious articles are porous. The water can make the article appear unsightly, and bacteria or fungus can then grow on the damp article. Typically, a water repellant material has to be applied to a finished cementitious article to protect the article from water penetration. This requires additional steps and costs.

What is needed in the art is an admixture that can be directly added to a cementitious mixture to provide water-repellant properties and to increase the compressive strength of a formed cementitious article. What is also needed in the art is a reduction in cycle time for the formation of a cementitious cast article.

US-A-5 763 508 conners a dispersion powder for use in mortar or concrete, wherein the dispersion powder contains vinyl ester polymers, a protective colloid, a saturated caboxylic acid ester and as anticaking agent. EP-A- 0 461 738 describes an admixture for cemetitious compositions comprising a hydrophobic material and a systhetic polymer. CHEMICAL ABSTRACTS, Vol. 109, No. 16, 17 October 1988, Columbus, Ohio, US; abstract No.: 134059 d, Y. CHIBA: page 312, XP 000158436 concerns the preparation of aqueous emulsions for water proofing cementitous compositions comprising alkyl ester of aliphatic C₁₂-C₂₀ carboxylic acids with emulsifying agents.

### SUMMARY OF THE INVENTION

The present invention provides an admixture for cementitious compositions comprising a latex polymer, a surfactant, and a hydrophobic material that is an organic ester of an aliphatic carboxylic acid, wherein the polymer is present in the admixture from 0.5% to 20% based on the total weight of the admixture, the organic ester of an aliphatic carboxylic acid is present in the admixture from 20% to 50 % based on the total weight of the admixture, and the surfactant is present in the admixture from 3% to 15% based on the total weight of the admixture, said admixture providing water repellant properties to the cementitious composition, wherein the latex polymer is selected from the group consisting of styrene butadiene copolymers, polyacrylate latex, polymethacrylate latex, carboxylated styrene latex, isoprene-styrene copolymer, and mixtures thereof.

The present invention also provides a cementitious composition comprising cement and the admixture.

### DETAILED DESCRIPTION OF THE INVENTION

The hydrophobic material is an organic ester of an aliphatic carboxylic acid. Preferably, the organic ester of an aliphatic carboxylic acid is represented by the general formula R₁-R₂, wherein R₁ is C₁₂-C₁₈ aliphatic carboxylic acid ester, and R₂ is a linear or branched C₁ to C₁₀ alkyl. Preferred aliphatic carboxylic acid esters include, but are not limited to, stearate, oleate, naturally-occurring oils, laurate, palmitate, myristic ester, and linoleic ester. Preferred hydrophobic materials include, but are not limited to, alkyl stearate esters, alkyl oleate esters, and mixtures thereof. Preferably, the organic ester of a stearate has the general formula C₁₇H₃₅COOR₃ and the organic ester of an oleate has the general formula CH₃(CH₂)₇=(CH₂)₇COOR₄, wherein R₃ and R₄ are each independently a linear or branched C₁ to C₁₀ alkyl. A preferred stearate is butyl stearate, and a preferred oleate is butyl oleate. Preferred naturally-occurring oils include castor oil and coconut oil.

The polymer of the present invention is a latex polymer. Relevant latex polymers include styrene butadiene copolymers, polyacrylate latex, polymethacrylate latex, carboxylated styrene latex, isoprene-styrene copolymer. A preferred latex polymer is a carboxylated styrene butadiene copolymer latex. Generally, the polymer has a number average molecular weight from 500 to 50,000, preferably, from 1,000 to 2,000. A preferred latex polymer is sold under the trade name TYLAC CPS814 from Reichold Chemicals, Inc.

The surfactant can be any surfactant that can emulsify the hydrophobic material. Suitable examples of the surfactant include, but are not limited to, ionic, non-ionic and amphoteric surfactants. Preferably, the surfactant is at least one of an ethoxylated alkyl phenol. Preferably the ethoxylated alkyl phenol has the general structure 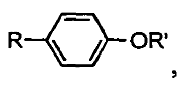 wherein R=C₁ to C₂₀ alkyl, and R'=-(CH₂CH₂-O)ₙ-, n=1 to 100. A preferred ethoxylated alkyl phenol is ethoxylated nonylphenol, wherein n=8.

The polymer is present in the admixture from 0.5% to 20% based on the total weight of the admixture, the hydrophobic material is present in the admixture from 20% to 50% based on the total weight of the admixture, and the surfactant is present in the admixture from about 3% to about 15% based on the total weight of the admixture.

Generally, when the admixture is added to a cementitious mixture, the admixture is added in an amount from 2 to 40 fluid ounces per hundred weight of cement (oz./cwt) (130.4-2607.9ml/100Kg). Preferably, the admixture is added in an amount from 4 to 20 oz./cwt (260.8-1303.9ml/100Kg).

If the polymer, surfactant, and hydrophobic material are each added separately to a cementitious mixture, the polymer is added in an amount from 0.00001Kg. to 0.01Kg. per Kg. of cement, the surfactant is added in an amount from 0.000001Kg. to 0.0001Kg. per pound of cement, and the hydrophobic material is added in an amount from 0.01Kg. to 0.4Kg. per pound of cement.

The cement in the cementitious composition can be any known cement. Suitable types of cement include, but are not limited to, calcium aluminate cement, hydratable alumina, hydratable aluminum oxide, colloidal silica, silicon oxide, portland cement, magnesia, pozzolan containing cements, and mixtures thereof. Preferably, the cement is Type I portland cement.

The cementitious composition can also contain any other known additive for cement that does not affect the desired properties of the present invention. Types of additives include, but are not limited to, set accelerators, set retarders, air-entraining agents, air-detraining agents, foaming agents, defoaming agents, corrosion inhibitors, shrinkage-reducing agents, pozzolans, dispersing agents, pigments, coarse aggregate, and fine aggregate. Other additives that can be used in cementitious compositions can be found in United States Patent No. 5,728,209 to Bury et al. Fine aggregates are materials that pass through a Number 4 sieve (ASTM C125 and ASTM C33), such as silica sand. Coarse aggregates are materials that are retained on a Number 4 sieve (ASTM C125 and ASTM C33), such as silica, quartz, crushed round marble, glass spheres, granite, limestone, calcite, feldspar, alluvial sands, or any other durable aggregate, and mixtures thereof

The admixture of the present invention imparts water repellant properties and prevents water permeation in poured concrete and in articles formed from cementitious compositions. These articles can include wet cast concrete, dry cast concrete, and manufactured concrete products. Without being limited to theory, it is theorized that the hydrophobic material provides the water repellent properties. By being mixed into the cementitious mixture, the hydrophobic material is substantially evenly distributed in the cementitious matrix, as well as on the surface, where it prevents the wetting of the cementitious article, and also reduces the efflorescence. This prevents water from entering or releasing from the cementitious structure, which can be porous. This is particularly the case for manufactured concrete products, such as blocks, pavers, and retaining wall units.

The polymeric material provides further resistance to prevent water permeation, particularly when the water is being driven against the surface of the cementitious article, such as during a rain storm. The polymeric material closes the inter-connected porosity inside the cementitious article to prevent water from penetrating through the cementitious article. Preferably, the particle size of the polymer is from 0.3 to 10µM to allow blocking of the pores in the cementitious article.

The admixture can also function as a lubricant and plasticizer. In a molding operation, this can reduce the friction between the cementitious matrix and can increase the efficiency of a remolding process. Also, the admixture can increase the workability of concrete.

Cementitious articles containing the admixture of the present invention can also pass a vacuum test (ASTM C1244). One side of a cementitious article is subjected to a sustained pressure of 381mm Hg for three minutes. The cementitious article is able to maintain the pressure with no more than a 12.7mm loss of vacuum.

Cementitious articles formulated with the admixture of the present invention are also able to pass the freeze-thaw test of ASTM C1262 with a weight loss of less than 1% after 200 cycles of freezing and thawing. The cementitious articles can also meet the requirements of ASTM C1372 for segmental retaining wall units.

Also, these cementitious articles have an increased compressive strength (as measured by ASTM C90 or ASTM C140), because of the retention of more water in the system, which is used for more hydration. The increase has been measured as being up to 30% or more. Also, in the manufacture of cast articles, the production cycle time can be reduced up to 10% or more.

Advantages of the present invention include low permeability, low shrinkage for better bonding and less cracking, and better environmental impact.

The above described invention can be demonstrated by, but is not limited to, the following examples.

### Example 1

Samples were prepared as 8"x8"x16" (20.32x20.32x40.64cm), 2-core medium weight blocks. The blocks were made from a typical mixture containing cement, aggregate, an admixture, and a sufficient amount of water for casting a block. The admixture for each set of testing that was added to the block mixture is indicated below. The amount of admixture added was based on adding the admixture at ml/100Kg. The blocks were tested according to ASTM C140 for compressive strength, the results for each test are indicated in the tables below, and according to ASTM C90 for compressive strength for loadbearing concrete masonry units. Set A was a mixture that contained a competitive water repellant admixture, 100S, from Sika, Zürich, Switzerland. Sets B-D contained an admixture that contained 40% butyl stearate, 3% carboxylated styrene butadiene latex, 8% ethoxylated nonylphenol, and 49% water by weight.

**SET A Admixture - Reference Mix (100s @ 130.4ml/100Kg (2 oz/cwt))**

| Unit | Gross Area M² | Total Load Kg. | Compressive Strength (Mpa) | | Received Weight (Kg.) |
|---|---|---|---|---|---|
| | | | Gross Area | Net Area | |
| A-1 | 0.077 | 54441 | 6.963 | 13.583 | 15.60 |
| A-2 | 0.077 | 49614 | 6.343 | 12.342 | 15.45 |
| A-3 | 0.077 | 51021 | 6.550 | 12.686 | 15.36 |

These blocks failed the compressive strength requirements of ASTM C90.

**SET B Admixture @ 130.4ml/100Kg (2 oz/cwt)**

| Test | Gross Area M² | Total Load Kg. | Compressive Strength (MPa) | | Received Weight (Kg.) |
|---|---|---|---|---|---|
| | | | Gross Area | Net Area | |
| B-1 | 0.077 | 55035 | 7.040 | 13.927 | 15.57 |
| B-2 | 0.077 | 55112 | 7.040 | 13.996 | 15.62 |
| B-3 | 0.077 | 58814 | 7.515 | 14.893 | 15.83 |

These blocks passed the compressive strength requirements of ASTM C90.

**SET C Admixture @ 391.2ml/100Kg (6 oz/cwt)**

| Unit | Gross Area M² | Total Load Kg. | Compressive Strength (MPa) | | Received Weight (Kg.) |
|---|---|---|---|---|---|
| | | | Gross Area | Net Area | |
| C-1 | 0.077 | 49134 | 6.274 | 12.480 | 15.59 |
| C-2 | 0.077 | 53761 | 6.895 | 13.652 | 15.64 |
| C-3 | 0.077 | 47183 | 5.998 | 11.928 | 15.56 |

These blocks failed the compressive strength requirements of ASTM C90.

**SET D Admixture @ 1629.9ml/100Kg (25 oz/cwt)**

| Unit | Gross Area M² | Total Load Kg. | Compressive Strength (MPa) | | Received Weight (Kg.) |
|---|---|---|---|---|---|
| | | | Gross Area | Net Area | |
| D-1 | 0.077 | 60175 | 7.653 | 14.962 | 16.23 |
| D-2 | 0.077 | 61635 | 7.860 | 15.375 | 16.47 |
| D-3 | 0.077 | 65191 | 8.343 | 16.272 | 16.47 |

These blocks passed the compressive strength requirements of ASTM C90.

The mixtures from Sets A-D were repeated and formed as blocks as above. The compressive strength and absorption were tested according to ASTM C140. The results are listed below.

**SETA Admixture - Reference Mix (100s @ 10.4ml/100Kg (2 oz/cwt))**

| Unit | Gross Area M² | Total Load Kg. | Compressive Strength (MPa) | | Received Weight (Kg.) |
|---|---|---|---|---|---|
| | | | Gross Area | Net Area | |
| A-4 | 0.077 | 64338 | 8.205 | 15.720 | 15.69 |
| A-5 | 0.077 | 66451 | 8.481 | 16.823 | 15.62 |
| A-6 | 0.077 | 64256 | 8.205 | 16.203 | 15.71 |

| Unit | Dimensions (cm.) | | | Face Shell Thickness (cm.) | | |
|---|---|---|---|---|---|---|
| | Length | Width | Height | Minimum Side | Opposite Side | Average |
| A-4 | 39.65 | 19.35 | 19.43 | 3.2 | 3.2 | 3.2 |
| A-5 | 39.65 | 19.38 | 19.38 | 3.2 | 3.22 | 3.22 |
| A-6 | 39.65 | 19.38 | 19.43 | 3.2 | 3.2 | 3.2 |

| Unit | Web Thickness (cm.) | | | Min. End Flange Thickness (cm..) | Equivalent Web Thickness (cm.) |
|---|---|---|---|---|---|
| | W-1 | W-2 | W-3 | | |
| A-4 | 2.61 | 2.64 | 2.54 | 5.08 | 6.02 |
| A-5 | 2.57 | 2.67 | 2.64 | 5.05 | 6.04 |
| A-6 | 2.57 | 2.64 | 2.61 | 5.05 | 5.99 |

| Unit | Absorption Kg/M³ | Density Kg/M³ | Moisture as Received | | % Total Absorbed |
|---|---|---|---|---|---|
| | | | as % total absorbed | as % dry weight | |
| A-4 | 192.22 | 1954.25 | 39 | 4 | 10 |
| A-5 | 208.24 | 1970.27 | 39 | 4 | 11 |
| A-6 | 208.24 | 1986.29 | 46 | 5 | 10 |

| Unit | Net Volume (M³x10⁻³) | Gross Volume (M³x10⁻³) | Net Area % Solid | Net Area (cm²) | Received Weight (Kg) |
|---|---|---|---|---|---|
| A-4 | 7.787 | 14.895 | 52.3 | 1019.27 | 15.74 |
| A-5 | 7.504 | 14.866 | 50.5 | 983.22 | 15.40 |
| A-6 | 7.561 | 14.923 | 50.7 | 989.78 | 15.76 |

Equivalent Thickness=9.9cm
Fire Rating (BOCA National Building Code/Tab;e 4.7,1, 1994)=1.9 hours
These blocks pass the requirements of ASTM C90 for Type 2 units.

**SETB Admixture @ 10.4ml/100Kg (2 oz/cwt)**

| Unit | Gross Area M² | Total Load Kg. | Compressive Strength (MPa) | | Received Weight (Kg.) |
|---|---|---|---|---|---|
| | | | Gross Area | Net Area | |
| A-4 | 0.077 | 72404 | 9.239 | 18.202 | 15.49 |
| A-5 | 0.077 | 75642 | 9.653 | 19.857 | 15.84 |
| A-6 | 0.077 | 74753 | 9.515 | 18.823 | 15.82 |

| Unit | Dimensions (cm.) | | | Face Shell Thickness (cm.) | | |
|---|---|---|---|---|---|---|
| | Length | Width | Height | Minimum Side | Opposite Side | Average |
| A-4 | 39.67 | 19.41 | 19.33 | 3.20 | 3.20 | 3.20 |
| A-5 | 39.65 | 19.35 | 19.38 | 3.18 | 3.25 | 3.20 |
| A-6 | 39.65 | 19.35 | 19.43 | 3.20 | 3.25 | 3.23 |

| Unit | Web Thickness (cm.) | | | Min. End Flange Thickness (cm.) | Equivalent Web Thickness (cm.) |
|---|---|---|---|---|---|
| | W-1 | W-2 | W-3 | | |
| A-4 | 2.61 | 2.64 | 2.54 | 5.08 | 5.99 |
| A-5 | 2.59 | 2.61 | 2.54 | 5.08 | 5.97 |
| A-6 | 2.59 | 2.61 | 2.61 | 5.08 | 6.02 |

| Unit | Absorption Kg/M³ | Density Kg/M³ | Moisture as Received | | % Total Absorbed |
|---|---|---|---|---|---|
| | | | as % total absorbed | as % dry weight | |
| A-4 | 208.24 | 1970.27 | 45 | 5 | 11 |
| A-5 | 224.26 | 2050.36 | 45 | 5 | 11 |
| A-6 | 176.20 | 2018.33 | 43 | 4 | 9 |

| Unit | Net Volume (M³x10⁻³) | Gross Volume (M³x10⁻³) | Net Area % Solid | Net Area (cm²) | Received Weight (Kg) |
|---|---|---|---|---|---|
| A-4 | 7.532 | 14.866 | 50.7 | 989.78 | 15.61 |
| A-5 | 7.249 | 14.866 | 48.8 | 950.45 | 15.62 |
| A-6 | 7.561 | 14.923 | 50.7 | 988.14 | 15.88 |

Equivalent Thickness= 9.65cm.
Fire Rating (BOCA National Building Code/Tab;e 4.7,1, 1994)=1.9 hours
These blocks pass the requirements of ASTM C90 for Type 2 units.

**SET C Admixture @ 391.2ml/100Kg (6 oz/cwt)**

| Unit | Gross Area M² | Total Load Kg. | Compressive Strength (MPa) | | Received Weight (Kg.) |
|---|---|---|---|---|---|
| | | | Gross Area | Net Area | |
| A-4 | 0.077 | 68221 | 8.687 | 17.306 | 15.79 |
| A-5 | 0.077 | 63858 | 8.136 | 16.134 | 15.49 |
| A-6 | 0.077 | 66271 | 8.481 | 16.823 | 15.82 |

| Unit | Dimensions (cm.) | | | Face Shell Thickness (cm.) | | |
|---|---|---|---|---|---|---|
| | Length | Width | Height | Minimum Side | Opposite Side | Average |
| A-4 | 39.65 | 19.35 | 19.46 | 3.15 | 3.28 | 3.20 |
| A-5 | 39.62 | 19.35 | 19.46 | 3.20 | 3.25 | 3.23 |
| A-6 | 39.62 | 19.38 | 19.41 | 3.18 | 3.23 | 3.20 |

| Unit | Web Thickness (cm) | | | Min. End Flange Thickness (cm.) | Equivalent Web Thickness (cm.) |
|---|---|---|---|---|---|
| | W-1 | W-2 | W-3 | | |
| A-4 | 2.51 | 2.64 | 2.64 | 5.05 | 6.02 |
| A-5 | 2.61 | 2.64 | 2.57 | 5.08 | 6.02 |
| A-6 | 2.64 | 2.67 | 2.57 | 5.08 | 6.05 |

| Unit | Absorption Kg/M³ | Density Kg/M³ | Moisture as Received | | % Total Absorbed |
|---|---|---|---|---|---|
| | | | as % total absorbed | as % dry weight | |
| A-4 | 224.26 | 1970.27 | 42 | 5 | 11 |
| A-5 | 208.24 | 2002.31 | 48 | 5 | 10 |
| A-6 | 208.24 | 1986.29 | 43 | 4 | 11 |

| Unit | Net Volume (M³x10⁻³) | Gross Volume (M³x10⁻³) | Net Area % Solid | Net Area (cm²) | Received Weight (Kg) |
|---|---|---|---|---|---|
| A-4 | 7.532 | 14.923 | 50.5 | 983.22 | 15.54 |
| A-5 | 7.561 | 14.923 | 50.7 | 986.50 | 15.88 |
| A-6 | 7.504 | 14.895 | 50.4 | 981.59 | 15.61 |

Equivalent Thickness=9.65 cm.
Fire Rating (BOCA National Building Code/Tab;e 4.7,1, 1994)=1.9 hours
These blocks pass the requirements of ASTM C90 for Type 2 units.

**SET D Admixture @ 1629.9ml/100Kg (25 oz/cwt)**

| Unit | Gross Area M² | Total Load Kg. | Compressive Strength (MPa) | | Received Weight (Kg.) |
|---|---|---|---|---|---|
| | | | Gross Area | Net Area | |
| A-4 | 0.077 | 86647 | 11.101 | 21.650 | 16.25 |
| A-5 | 0.077 | 86012 | 10.963 | 21.512 | 16.45 |
| A-6 | 0.077 | 81104 | 10.342 | 20.271 | 16.43 |

| Unit | Dimensions (cm.) | | | Face Shell Thickness (cm.) | | |
|---|---|---|---|---|---|---|
| | Length | Width | Height | Minimum Side | Opposite Side | Average |
| A-4 | 39.67 | 19.41 | 19.43 | 3.20 | 3.20 | 3.20 |
| A-5 | 39.67 | 19.41 | 19.46 | 3.20 | 3.23 | 3.20 |
| A-6 | 39.73 | 19.46 | 19.41 | 3.20 | 3.20 | 3.20 |

| Unit | Web Thickness (cm.) | | | Min. End Flange Thickness (cm.) | Equivalent Web Thickness (cm.) |
|---|---|---|---|---|---|
| | W-1 | W-2 | W-3 | | |
| A-4 | 2.61 | 2.64 | 2.57 | 5.08 | 5.99 |
| A-5 | 2.64 | 2.64 | 2.54 | 5.08 | 6.02 |
| A-6 | 2.641 | 2.64 | 2.57 | 5.08 | 5.99 |

| Unit | Absorption Kg/M³ | Density Kg/M³ | Moisture as Received | | % Total Absorbed |
|---|---|---|---|---|---|
| | | | as % total absorbed | as % dry weight | |
| A-4 | 176.20 | 2050.36 | 58 | 5 | 8 |
| A-5 | 176.20 | 2050.36 | 57 | 5 | 9 |
| A-6 | 176.20 | 2050.36 | 51 | 4 | 8 |

| Unit | Net Volume (M³x10⁻³) | Gross Volume (M³x10⁻³) | Net Area % Solid | Net Area (cm²) | Received Weight (Kg) |
|---|---|---|---|---|---|
| A-4 | 7.617 | 14.951 | 50.9 | 60.8 | 16.42 |
| A-5 | 7.617 | 14.951 | 50.9 | 60.7 | 16.37 |
| A-6 | 7.617 | 14.951 | 50.9 | 60.8 | 16.29 |

Equivalent Thickness= 9.65 cm.
Fire Rating (BOCA National Building Code/Tab;e 4.7,1, 1994)=1.9 hours
These blocks pass the requirements of ASTM C90 for Type 2 units.

### Experiment 2

Several comparative mixtures were prepared and cast into blocks at different block manufacturing facilities. The compositions and the test run for each mix are detailed below in Tables 2-1 and 2-2. The admixture contained 40% butyl stearate, 3% carboxylated styrene butadiene latex, 8% ethoxylated nonylphenol, and 49% water by weight. Also, sufficient amount of water was added in order to provide a castable mixture.

**TABLE 2-1**

| Material | Unit | 1 (Control) | 2 | 3 | 4 |
|---|---|---|---|---|---|
| Cement, Type 1 | Kg | 204.1 | 204.1 | 204.1 | 195 |
| Slag Cement | Kg | 22.7 | 22.7 | 22.7 | 20.4 |
| Cement Reduction | % | -- | 0% | 0% | 5% |
| Slag Cement % | % | 0% | 10% | 10% | 9% |
| Sand | Kg | 526.2 | 526.2 | 526.2 | 526.2 |
| Pea Rock | Kg | 471.7 | 471.7 | 471.7 | 471.7 |
| #10 Screenings | Kg | 816.5 | 816.5 | 816.5 | 816.5 |
| water repellant admixture sold under the name RHEOMIX® 235 from Master Builders, Inc., Cleveland, Ohio | ml | 1035.10 | 0 | 0 | 0 |
| Plasticizer sold under the name RHEOMIX® 630S from Master Builders, Inc., Cleveland, Ohio | ml | 59.15 | 0 | 0 | 0 |
| Non-chloride accelerator sold under the name POZZOLITH® NC 534, from Master Builders, Inc., Cleveland, Ohio. | Ml | 2070.15 | 2070.15 | 2070.15 | 2070.15 |
| Admixture | Ml | 0 | 59.15 | 118.30 | 118.30 |
| Test Results | | | | | |
| Plastic Appearance | | good | good | good | Good |
| Swipe | | light | trace | It.-mod. | It.-mod. |
| 1 day gross strength | Mpa | 8.136 | 8.639 | 7.729 | 7.191 |
| % of Control | % | -- | 106.2% | 95.0% | 88.4% |
| 7 day gross strength | Mpa | 10.452 | 9.715 | 9.370 | 10.604 |
| % of Control | % | -- | 92.9% | 89.6% | 101.5% |
| Production Increase | | | | | |
| Feed time | Sec | 1.70 | 1.50 | 1.50 | 1.30 |
| Cycle time | Sec | 7.60 | 7.20 | 7.40 | 7.30 |
| Cycles/Min | # | 7.89 | 8.33 | 8.11 | 8.22 |
| Est. cycle time | Sec | 7.60 | 7.20 | 7.40 | 7.30 |
| Cycle Time Reduction | Sec | -- | 0.40 | 0.20 | 0.30 |
| Cycle Time Reduction | % | - | 5.3% | 2.6% | 3.9% |
| Production Increase | % | 0 | 5.3 | 2.6 | 3.9 |
| Strength Increase | | | | | |
| 1 day | % | -- | 6.2% | -5.0% | -11.6% |
| 7 day | % | -- | -7.1% | -10.4% | 1.5% |

The results in Table 2-1 show that the inventive admixture increased the compressive strength and reduced the cycle time to manufacture cast blocks.

**TABLE 2-2**

| Material | Unit | 1 (Control) | 2 | 3 | 4 | 5 |
|---|---|---|---|---|---|---|
| Cement, Type 1 | Kg | 403.7 | 403.7 | 403.7 | 362.9 | 362.9 |
| Fly ash | Kg | 0 | 0 | 0 | 0 | 0 |
| Cement Reduction | % | -- | 0% | 0% | 10% | 10% |
| Fly ash % | % | 0% | 0% | 0% | 0% | 0% |
| Sand | Kg | 1831.6 | 1831.6 | 1831.6 | 1831.6 | 1831.6 |
| Pea Rock | Kg | 148.8 | 148.8 | 148.8 | 148.8 | 148.8 |
| #10 Screenings | Kg | 1224.7 | 1224.7 | 1224.7 | 1224.7 | 1224.7 |
| MAXIPLAST plasticizer from W.R. Grace, Cambridge, MA | ml | 118.3 | 0 | 0 | 0 | 0 |
| Polymeric carboxylate backbone with polyether group side chains dispersant, sold as RHEOMIX® 730FC-S from Master Builders, Inc., Cleveland, Ohio | ml | 0 | 798.50 | 1330.80 | 1182.95 | 0 |
| DARACCEL calcium chloride based accelerator from W.R. Grace, Cambridge, MA | ml | 2661.60 | 2661.60 | 2661.60 | 2661.60 | 2661.60 |
| Admixture | ml | 0 | 0 | 0 | 0 | 473.20 |
| Test Results | | | | | | |
| Plastic Appearance | | good | v. tight | v. tight | good | best |
| Swipe | | trace | none | none | trace | light |
| 14 day net strength | MPa | 11.307 | 10.963 | 11.376 | 10.411 | 9.515 |
| % of Control | % | -- | 97.0% | 100.6% | 92.1% | 84.1% |
| Production Increase | | | | | | |
| Feed time | Sec | 1.70 | 1.50 | 1.50 | 1.30 | 1.30 |
| Cycle time | Sec | 7.55 | 7.13 | 7.32 | 7.14 | 6.80 |
| Cycles/Min | # | 7.95 | 8.42 | 8.20 | 8.40 | 8.82 |
| Est. cycle time | Sec | 7.55 | 7.13 | 7.32 | 7.14 | 6.80 |
| Cycle Time Reduction | Sec | -- | 0.42 | 0.23 | 0.41 | 0.75 |
| Cycle Time Reduction | % | -- | 5.6% | 3.0% | 5.4% | 9.9% |
| Production Increase | % | 0.0% | 5.6% | 3.0% | 5.4% | 9.9% |
| Strength Increase | | | | | | |
| 28 day | % | -- | -3.0% | 0.6% | -7.9% | -15.9% |

The results in Table 2-2 show that the inventive admixture provided the best plastic appearance of cast blocks, and it decreased the manufacturing cycle time to cast blocks.

### Example 3

Samples were prepared and tested according to ASTM C140, ASTM1262, and ASTM 1372. The samples were prepared from a mixture containing 200 kg of Type 10 cement, 1290 kg of concrete sand, 860 kg of birds-eye stone, 0.4 liters of a polymeric carboxylate backbone with polyether group side chains dispersant, sold as RHEOMIX® 730FC-S from Master Builders, Inc., Cleveland, Ohio, 0.6 liters of an admixture containing 40% butyl stearate, 3% carboxylated styrene butadiene latex, 8% ethoxylated nonylphenol, and 49% water by weight, and a sufficient amount of water to provide a castable mixture. The mixture was cast into full size units with the measurements described below in Table 3-1. From each unit, a 2"x4"x8" (5.08cmx10.16cmx20.32cm) coupon was cut from the unit for compression testing, the results of which are detailed in Table 3-2. Also, an additional sample was taken from the unit for absorption testing in accordance with ASTM C140, the results of which are detailed in Table 3-3.

**Table 3-1**

| Unit | Estimated Width* (in.) | Average Height (cm.) | Average Length (cm.) | Received Weight (Kg) |
|---|---|---|---|---|
| 1 | 29.79 | 19.61 | 44.83 | 35.90 |
| 2 | 29.57 | 19.66 | 44.73 | 35.44 |
| 3 | 29.69 | 19.61 | 44.73 | 35.07 |
| 4 | 29.57 | 19.66 | 44.83 | 35.76 |
| 5 | 29.59 | 19.63 | 44.73 | 35.61 |
| Average | 29.64 | 19.63 | 44.873 | 35.52 |

| | | | | |
|---|---|---|---|---|
| * The width dimension of this unit included a split surface. Therefore, this dimension was an estimated average rather than an average calculated from measured dimensions. Variations from the specified dimensions do no include the width dimension. Maximum Variation from Specified Dimensions = 0.050 cm. Maximum Permitted Variation from Specified = 0.318 cm. Variation Between Heights of Measured Specimens = 0.025 cm. | | | | |

**Table 3-2**

| Unit | Avg. Width (cm.) | Avg. Height (cm.) | Avg. Length (cm.) | Coupon Weight (Kg.) | Max. Comp. Load (Kg.) | Tested Comp. Strength (MPa) | h/t | h/t correct. factor | Correct. Comp. Strength (MPa) |
|---|---|---|---|---|---|---|---|---|---|
| 1 | 4.95 | 10.16 | 20.47 | 2.26 | 28876 | 27.924 | 2.05 | 1.01 | 28.069 |
| 2 | 4.88 | 10.21 | 20.42 | 2.18 | 27170 | 26.752 | 2.09 | 1.01 | 27.007 |
| 3 | 4.90 | 10.13 | 20.40 | 2.20 | 29302 | 28.737 | 2.07 | 1.01 | 28.930 |
| 4 | 4.88 | 10.19 | 20.42 | 2.24 | 29302 | 28.855 | 2.08 | 1.01 | 29.110 |
| 5 | 4.88 | 10.13 | 20.47 | 2.18 | 26209 | 25.745 | 2.08 | 1.01 | 25.945 |
| Avg. | 4.90 | 10.16 | 20.45 | 2.20 | 28172 | 27.579 | | | 27.786 |

| | | | | | | | | | |
|---|---|---|---|---|---|---|---|---|---|
| "h/t" is the ratio of the average height of the block to the average width. | | | | | | | | | |

**Table 3-3**

| Unit | Received Weight (Kg.) | Immersed Weight (Kg.) | Saturated Surface - Dry Weight (Kg.) | Oven-Dry Weight (Kg.) | Absorption | | Kg/M³ |
|---|---|---|---|---|---|---|---|
| | | | | | Kg/M³ | % | |
| 1 | 2.04 | 1.19 | 2.09 | 1.99 | 112.13 | 5.0 | 2228.17 |
| 2 | 2.03 | 1.18 | 2.07 | 1.97 | 115.33 | 5.2 | 2210.55 |
| 3 | 2.00 | 1.17 | 2.05 | 1.95 | 118.54 | 5.4 | 2208.95 |
| 4 | 2.00 | 1.17 | 2.05 | 1.95 | 112.13 | 5.0 | 2223.36 |
| 5 | 1.97 | 1.15 | 2.02 | 1.92 | 116.93 | 5.3 | 2197.73 |
| Average | 2.01 | 1.17 | 2.06 | 1.96 | 115.33 | 5.2 | 2213.75 |

The results in Tables 3-2 and 3-3 show that cementitious articles formulated using the admixture of the present invention exceed the requirements for ASTM C1372. ASTM C1372 requires a minimum net compressive strength of 3000 psi (20.684 Mpa) and an absorption of no more than 13 lb/ft³ (208.24Kg/M³).

For freeze-thaw testing according to ASTM 1262, five samples were prepared as above. Samples from the full size unit were cut to 1.25"x4"x8" (3.175cmx10.16cmx20.32cm). The weight of each sample is listed below in Table 3-4, the accumulative residue weight is listed below in Table 3-5, and the specimen weight loss percentage is listed below in table 3-6. The samples went through 200 freeze thaw cycles in water.

**Table 3-4**

| Unit | Received Weight (Kg.) | Calculated Oven-Dry Initial Weight (Kg.) |
|---|---|---|
| 1 | 1.4370 | 1.4209 |
| 2 | 1.4174 | 1.3955 |
| 3 | 1.4281 | 1.4045 |
| 4 | 1.3663 | 1.3240 |
| 5 | 1.4141 | 1.3961 |

**Table 3-5**

| Unit | Accumulative Residue Weight (Kg.x10⁻⁴) | | | | |
|---|---|---|---|---|---|
| | 0 cycles | 50 cycles | 100 cycles | 150 cycles | 200 cycles |
| 1 | 0 | 10.43 | 15.88 | 20.41 | 27.22 |
| 2 | 0 | 9.98 | 20.87 | 27.22 | 45.81 |
| 3 | 0 | 10.43 | 31.30 | 42.64 | 52.16 |
| 4 | 0 | 10.88 | 23.59 | 37.46 | 68.04 |
| 5 | 0 | 10.43 | 20.87 | 34.48 | 56.70 |

**Table 3-6**

| Unit | Specimen Weight loss (%) | | | | |
|---|---|---|---|---|---|
| | 0 cycles | 50 cycles | 100 cycles | 150 cycles | 200 cycles |
| 1 | 0 | 0.1 | 0.1 | 0.1 | 0.2 |
| 2 | 0 | 0.1 | 0.1 | 0.2 | 0.3 |
| 3 | 0 | 0.1 | 0.2 | 0.3 | 0.4 |
| 4 | 0 | 0.1 | 0.2 | 0.3 | 0.5 |
| 5 | 0 | 0.1 | 0.1 | 0.2 | 0.4 |

The results in Tables 3-5 and 3-6 show that cementitious articles formed using the admixture of the present invention surpass the requirements for ASTM C1262.

Additionally, samples were prepared and tested as above for testing according to ASTM C1262, except that salt water was used in place of water for the freeze thaw testing. This testing does not conform to any standardized testing requirement, but was run for informational purposes only. Because of the salt water, the samples were only tested through 15 cycles. The weight of each sample is listed below in Table 3-7, the accumulative residue weight is listed below in Table 3-8, and the specimen weight loss percentage is listed below in table 3-9.

Table 3-7

| Unit | Received Weight (Kg.) | Calculated Initial Weight (Kg.) |
|---|---|---|
| 1 | 1.4309 | 1.4146 |
| 2 | 1.4220 | 1.4017 |
| 3 | 1.4275 | 1.3952 |
| 4 | 1.4378 | 1.4177 |
| 5 | 1.4364 | 1.4211 |

**Table 3-8**

| Unit | Accumulative Residue Weight (Kg.) | |
|---|---|---|
| | 0 cycles | 15 cycles |
| 1 | 0 | 0.2329 |
| 2 | 0 | 1.4017 |
| 3 | 0 | 0.6731 |
| 4 | 0 | 0.1140 |
| 5 | 0 | 0.0124 |

**Table 3-9**

| Unit | Specimen Weight Loss (%) | |
|---|---|---|
| | 0 cycles | 15 cycles |
| 1 | 0 | 16.5 |
| 2 | 0 | 100.0 |
| 3 | 0 | 48.2 |
| 4 | 0 | 8.0 |
| 5 | 0 | 0.9 |

## Claims

1. An admixture for cementitious compositions comprising a latex polymer, a surfactant, and a hydrophobic material that is an organic ester of an aliphatic carboxylic acid, wherein the polymer is present in the admixture from 0. 5 % to 20% based on the total weight of the admixture, the organic ester of an aliphatic carboxylic acid is present in the admixture from 20% to 50% based on the total weight of the admixture, and the surfactant is present in the admixture from 3% to 15% based on the total weight of the admixture, said admixture providing water repellant properties to the cementitious composition, wherein the latex polymer is selected from the group consisting of styrene butadiene copolymers, polyacrylate latex, polymethacrylate latex, carboxylated styrene latex, isoprene-styrene copolymer, and mixtures thereof.

2. The admixture of claim 1, wherein the organic ester of an aliphatic carboxylic acid is represented by the general formula R₁-R₂, wherein R₁ is C₁₂-C₁₈ aliphatic carboxylic acid ester, and R₂ is a linear or branched C₁ to C₁₀ alkyl.

3. The admixture of claim 1, wherein the hydrophobic material is selected from the group consisting of butyl stearate, butyl oleate, and mixtures thereof.

4. The admixture of claim 1, wherein the polymer has a number average molecular weight from 500 to 50,000.

5. A cementitious composition comprising cement and an admixture according to one of the claims 1 to 4.

## Patentansprüche

1. Beimischung für zementartige Zusammensetzungen, umfassend ein Latexpolymer, ein Surfactant und ein hydrophobes Material, das ein organischer Ester einer aliphatischen Carbonsäure ist, worin das Polymer in der Beimischung in einer Menge von 0,5 % bis 20 %, bezogen auf das Gesamtgewicht der Beimischung, vorhanden ist, der organische Ester einer aliphatischen Carbonsäure in der Beimischung in einer Menge von 20 % bis 50 %, bezogen auf das Gesamtgewicht der Beimischung, vorhanden ist, und das Surfactant in der Beimischung in einer Menge von 3 % bis 15 %, bezogen auf das Gesamtgewicht der Beimischung, vorhanden ist, wobei diese Beimischung der zementartigen Zusammensetzung wasserabstoßende Eigenschaften verleiht, und worin das Latexpolymer ausgewählt ist aus der Gruppe, die besteht aus Styrol-Butadien-Copolymeren, Polyacrylatlatex, Polymethacrylatlatex, carboxyliertem Styrollatex, Isopren-Styrol-Copolymer und Gemischen hiervon.

2. Beimischung nach Anspruch 1, worin der organische Ester einer aliphatischen Carbonsäure die allgemeine Formel R₁-R₂ hat, worin R₁ für einen C₁₂-C₁₈-aliphatischen Carbonsäureester steht und R₂ für ein lineares oder verzweigtes C₁-C₁₀-Alkyl steht.

3. Beimischung nach Anspruch 1, worin das hydrophobe Material ausgewählt ist aus der Gruppe, die besteht aus Butylstearat, Butyloleat und Gemischen hiervon.

4. Beimischung nach Anspruch 1, worin das Polymer ein zahlenmittleres Molekulargewicht von 500 bis 50.000 hat.

5. Zementartige Zusammensetzung, umfassend Zement und eine Beimischung nach einem der Ansprüche 1 bis 4.

## Revendications

1. Adjuvant pour compositions cimentaires, comprenant un polymère de latex, un tensioactif et un matériau hydrophobe, qui est un ester organique d'un acide carboxylique aliphatique, où le polymère est présent dans l'adjuvant en une quantité de 0,5 à 20 % par rapport au poids total de l'adjuvant, l'ester organique d'un acide carboxylique aliphatique est présent dans l'adjuvant en une quantité de 20 à 50 % par rapport au poids total de l'adjuvant, et le tensioactif est présent dans l'adjuvant en une quantité de 3 à 15 % par rapport au poids total de l'adjuvant, ledit adjuvant conférant des propriétés hydrofuges à la composition cimentaire, où le polymère de latex est choisi dans le groupe consistant en les copolymères styrène-butadiène, le latex de polyacrylate, le latex de polyméthacrylate, le latex de styrène carboxylé, le copolymère isoprène-styrène et les mélanges de ceux-ci.

2. Adjuvant selon la revendication 1, dans lequel l'ester organique d'un acide carboxylique aliphatique est représenté par la formule générale R₁-R₂, dans laquelle R₁ est un ester d'un acide carboxylique aliphatique en C₁₂₋C₁₈, et R₂ est un groupe alkyle en C₁ à C₁₀ à chaîne linéaire ou ramifiée.

3. Adjuvant selon la revendication 1, dans lequel le matériau hydrophobe est choisi dans le groupe consistant en le stéarate de butyle, l'oléate de butyle et les mélanges de ceux-ci.

4. Adjuvant selon la revendication 1, dans lequel le polymère a une masse moléculaire moyenne en nombre de 500 à 50 000.

5. Composition cimentaire comprenant du ciment et un adjuvant selon l'une des revendications 1 à 4.
